(19) Europäisches Patentamt
European Patent Office
Office européen des brevets

(11) Veröffentlichungsnummer: **0 636 642 B1**

# (12) EUROPÄISCHE PATENTSCHRIFT

(45) Veröffentlichungstag der Patentschrift: **06.12.95**

(21) Anmeldenummer: **94111381.3**

(22) Anmeldetag: **21.07.94**

(51) Int. Cl.⁶: **C08G 77/398**, C08G 77/58, C08K 5/00, C07F 15/00, B01J 31/28, C07C 245/22, C07C 245/24

## (54) Organosiloxangebundene Übergangsmetallkomplexe.

(30) Priorität: **22.07.93 DE 4324685**

(43) Veröffentlichungstag der Anmeldung:
**01.02.95 Patentblatt 95/05**

(45) Bekanntmachung des Hinweises auf die Patenterteilung:
**06.12.95 Patentblatt 95/49**

(84) Benannte Vertragsstaaten:
**AT BE CH DE ES FR GB IT LI NL**

(56) Entgegenhaltungen:
**EP-A- 0 602 638**

**DATABASE WPI Derwent Publications Ltd., London, GB; AN 72-63513T & SU-A-327 213 (ROZOVA NI GRINBLAT MP BER)**

**DATABASE WPI Derwent Publications Ltd., London, GB; AN 89-035266 & JP-A-63 307 889 (LUMIERE KK) 15. Dezember 1988**

(73) Patentinhaber: **Wacker-Chemie GmbH**
**Hanns-Seidel-Platz 4**
**D-81737 München (DE)**

(72) Erfinder: **Dauth, Jochen, Dr.**
**Piracher Strasse 78**
**D-84489 Burghausen (DE)**
Erfinder: **Deubzer, Bernward, Dr.**
**Virchowstrasse 14**
**D-84489 Burghausen (DE)**
Erfinder: **Peetz, Udo**
**Kreuzfelsen 2**
**D-84489 Burghausen (DE)**

**EP 0 636 642 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

DATABASE WPI Derwent Publications Ltd., London, GB; AN 90-005254 & JP-A-1 289 806 (ASAHI CHEMICAL IND. KK.) 21. November 1989

DATABASE WPI Derwent Publications Ltd., London, GB; AN 72-63513T

DATABASE WPI Derwent Publications Ltd., London, GB; AN 89-035266 & JP-A-63 307 889

DATABASE WPI Derwent Publications Ltd., London, GB; AN 90-005254 & JP-A-1 289 806

## Beschreibung

Die Erfindung betrifft organosiloxangebundene Übergangsmetallkomplexe, Verfahren zu deren Herstellung und vernetzbare Zusammensetzungen, welche die organosiloxangebundenen Übergangsmetallkomplexe als homogene Hydrosilylierungskatalysatoren enthalten.

Es ist bekannt, daß die Addition von Si-gebundenem Wasserstoff an eine aliphatische Mehrfachbindung, die als Hydrosilylierung bezeichnet wird, durch Übergangsmetallkatalysatoren, insbesondere Platinverbindungen, gefördert werden kann. Hierzu sei beispielsweise auf US-A 5,187,134 verwiesen, in der polymere Komplexe von Metallen der VIII. Nebengruppe des Periodensystems mit Organosiloxan-Phenylphosphinliganden als heterogene Hydrosilylierungskatalysatoren verwendet werden.

In der US-A 5,175,325 sind Platin-Organosiloxankomplexe beschrieben, die sich in additionsvernetzenden Organosiloxanzusammensetzungen lösen. Die Organosiloxanzusammensetzungen vernetzen bei Raumtemperatur oder können durch einen Inhibitor derart stabilisiert werden, daß sie erst bei Erwärmen vernetzen.

Triazenido-, Tetrazenido-, Tetrazdienido- und Pentazdienido-Übergangsmetall-Komplexe sind aus D.S. Moore et al., Advances in Inorganic Chemistry and Radiochemistry, Vol. 30, Seiten 1 - 68, 1986, bekannt.

Triazeno-1-oxid-Übergangsmetall-Komplexe sind aus Tandon et al., Synth. React. Inorg. Met.-Org. Chem., 21 (3), Seiten 479 - 496, (1991), bekannt.

Es bestand die Aufgabe Katalysatoren bereitzustellen, die sich leicht in additionsvernetzenden Organosiloxanzusammensetzungen lösen, in solchen Zusammensetzungen ohne Inhibitor bei Raumtemperatur und Lichtausschluß stabil sind, aber nach Aktivierung durch Wärme und/oder Licht die Anlagerung von Si-gebundenem Wasserstoff an eine aliphatische Mehrfachbindung fördern.

Gegenstand der Erfindung sind Organosiloxane, mit Ausnahme von 1,3-Divinyl-1,1,3,3-tetramethyldisiloxan, welche mindestens einen chemisch gebundenen Übergangsmetallkomplex von Pt, Pd, Rh, Ru, Os oder Ir enthalten, der einen Triazen-, Tetrazen-, Tetrazdien-, Pentazdien- oder Triazenoxid-Ligand aufweist.

Bevorzugte Organosiloxane der Erfindung sind Organosiloxane, welche aus mindestens zwei Einheiten der allgemeinen Formel 1,

$$B_mR_nSiO_{\frac{4-n-m}{2}} \qquad (1),$$

aufgebaut sind, in der

**B** einen Rest der allgemeinen Formel 2,

$$MX_aY_bZ_c \qquad (2),$$

bedeutet, wobei

**M** Pt, Pd, Rh, Ru, Os oder Ir ist,

**X** einen Triazen-, Tetrazen-, Tetrazdien- Pentazdien- oder Triazenoxid-Liganden ausgewählt aus der Gruppe von $ANNNR^1$, $ANNNR^1R^2$, $ANNNA^1$, $ANR^2NNNR^3A^1$, $ANNNNA^1$, $ANNNR^4NNA^1$, $ANNNNNA^1$ und $ANNNOR^1$, bedeutet, wobei

**R** einen einwertigen, gegebenenfalls substituierten Kohlenwasserstoffrest mit 1 bis 18 Kohlenstoffatomen je Rest,

**R¹** einen einwertigen, gegebenenfalls substituierten Kohlenwasserstoffrest mit 1 bis 18 Kohlenstoffatomen je Rest, oder einen Rest der Formel $-SiR^5_d(OR^5)_{3-d}$,

**R²**, **R³** und **R⁴** gleich oder verschieden sind, ein Wasserstoffatom oder einen einwertigen gegebenenfalls substituierten Kohlenwasserstoffrest mit 1 bis 18 Kohlenstoffatomen je Rest bedeuten, und

**A** und **A¹** gleich oder verschieden sind, einen Rest der Formel

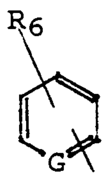 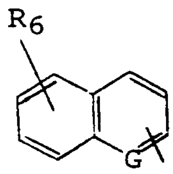 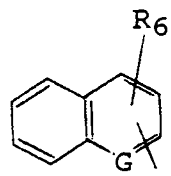 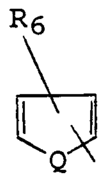 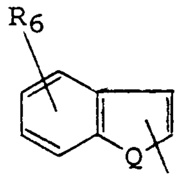 oder 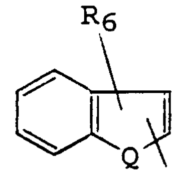

bedeuten, wobei **G** CH oder N und **Q** S, O oder NH ist,
**R**$^6$ einen einwertigen gegebenenfalls substituierten Kohlenwasserstoffrest mit 1 bis 12 Kohlenstoffatomen je Rest oder einen Rest der Formel -F, -Cl, -Br, -I, -H, $-NH_2$, $-NR^6_2$ , $-NO_2$, -OH, $-OR^5$, -SH, -CN, -COOH, -COCl, $-CONH_2$, $-COR^5$, -CHO, $-SO_2NHR^5$, $-SO_3H$, $-SO_2Cl$ oder $-R^7-SiR^5_d(OR^5)_{3-d}$ bedeutet,
**R**$^5$ gleich oder verschieden ist und einen Alkylrest mit 1 bis 8 Kohlenstoffatomen je Rest und
**R**$^7$ einen zweiwertigen Kohlenwasserstoffrest mit 1 bis 8 Kohlenstoffatomen je Rest,
**d** 0, 1, 2 oder 3 bedeuten,
**Y** gleich oder verschieden ist und einen Liganden ausgewählt aus der Gruppe von Cl, Br, I, $NH_3$, $PR_3$, H, CO, 1,5-Cyclooctadien, Pyridin, Bipyridin, Acetat, Acetylacetonat, Phenylnitril, Ethylendiamin, Acetonitril, 2,5-Norbornadien, Nitrat, Nitrit, $H_2O$, Benzol, Diphenylphosphinoethan und 1,3-Divinyl-1,1,3,3-tetramethyldisiloxan,
**Z** gleich oder verschieden ist und einen Ligandenrest ausgewählt aus der Gruppe von $Sp-NH_2$, $Sp-NR^{10}_2$, $Sp-NR^{10}(R^7)NR^{10}_2$, Sp-4-Pyridin, Sp-2-Bipyridin, Sp-4-Bipyridin, $Sp-PR^{10}(R^7)PR^{10}_2$, $Sp-PR^{10}_2$, $Sp-POR^{10}_2$, $Sp-P(OR^{10})_2$, Sp-SH und $Sp-SR^{10}$ bedeuten,
**R**$^{10}$ ein Wasserstoffatom oder einen Alkylrest mit 1 bis 6 Kohlenstoffatomen,
**Sp** einen zweiwertigen, SiC-gebundenen, gegebenenfalls substituierten Kohlenwasserstoffrest mit 1 bis 18 Kohlenstoffatomen je Rest,
**a** 1, 2, 3 oder 4,
**b** 0 oder eine ganze Zahl von 1 bis 4,
**c** 1, 2, 3 oder 4 und
**m** und **n** gleich oder verschieden sind und 0 oder eine ganze Zahl von 1 bis 3 bedeuten.

Bevorzugte Organosiloxane der Erfindung sind auch Organosiloxane, welche aus mindestens zwei Einheiten der allgemeinen Formel 3,

$$B'_m R_n SiO_{\frac{4-n-m}{2}} \qquad (3),$$

aufgebaut sind, in der
**B'** einen Rest der allgemeinen Formel 4,

$$MX'_e Y_f \qquad (4),$$

bedeutet, wobei
**X'** einen Triazen-, Tetrazen-, Pentazdien- oder Triazenoxid-Ligandenrest, ausgewählt aus der Gruppe von ANNNSp, $ANNNSpR^2$, $ANNSpNA^1$, $ANSpNNNR^3A^1$, $ANNNSpNNA^1$, und ANNNOSp,
bedeutet,
**e** 1, 2, 3 oder 4,
**f** 0 oder eine ganze Zahl von 1 bis 6 bedeuten und
**R, M, Y, Sp, R$^1$, R$^2$, R$^3$, R$^4$, R$^5$, R$^6$, R$^7$, A, A$^1$, d, m** und **n** die vorstehenden Bedeutungen aufweisen.

Beispiele für Kohlenwasserstoffreste **R, R$^1$, R$^2$, R$^3$, R$^4$** und **R$^6$** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Tri-methylpentylrest; Nonylreste, wie der n-Nonylrest; Decylreste, wie der n-Decylrest; Dodecylreste, wie der n-Dodecylrest; und Octadecylreste, wie der n-Octadecylrest; Cycloalkylreste, wie der Cyclohexylrest; Alkenylreste, wie der Vinyl-, 1-Propenyl-, 1-Butenyl-, 2-Butenyl-, Allyl-, Isobutenyl-, 1-Pentenyl- und 2-Methyl-1-butenylrest; Alkinylreste, wie der Ethinyl-, Propargyl-, 1-Propinyl- und 1-Butinylrest, und Aralkylreste, wie der Benzylrest und der α- und β-Phenylethylrest; wobei Alkylreste bevorzugt sind.

Beispiele für substituierte Kohlenwasserstoffreste sind Halogenalkylreste, wie der 3,3,3-Trifluor-n-propylrest, der 2,2,2,2',2',2'-Hexafluorisopropylrest, der Heptafluorisopropylrest, der 3-Chlor-n-propylrest, 2-Ethylbromid und 3-Propylbromid; Halogenarylreste, wie der o-, m- und p-Chlorphenylrest, o-, m- und p-Bromphenylrest; substituierte Arylreste, wie der 4-Cyanophenyl-, 4-Nitrophenyl- und 4-Methoxyphenylrest; Hydroxyalkylreste, wie Reste der Formeln $HOCH_2CH_2OCH_2CH_2$-, $HOCH_2CH_2$- und $CH_3CH_2CH(OH)CH_2$-; Aminoalkylreste, wie der Aminomethyl- und Aminoethylrest; Carboxyalkylreste, wie Reste der Formeln $-(CH_2)_7COOH$, $-(CH_2)_8COOH$ und $-CH_2COCH_2CH_2COOH$ sowie deren Ester und Amide $-(CH_2)_7COOCH_3$, $-(CH_2)_7COOC_2H_5$, $-(CH_2)_7CONH_2$, $-(CH_2)_8COOCH_3$, $-(CH_2)_8COOC_2H_5$, $-(CH_2)_8CONH_2$ und einen Rest der Formel $-CH(COOC_2H_5)_2$; Carboxyarylreste, wie der 4-Carboxyphenyl-, 3-Carboxyphenylrest und Reste der Formeln $4-CH_3OCOC_6H_4$-, $4-C_2H_5OCOC_6H_4$- und $4-H_2NCOC_6H_4$-; und substituierte Aralkylreste, wie der substituierte Benzylrest und der substituierte α- und β-Phenylethylrest.

Die vorstehenden Beispiele für Alkylreste beziehen sich auch auf $\mathbf{R^5}$.

Die vorstehenden Beispiele für Alkylreste mit 1 bis 6 Kohlenstoffatomen beziehen sich auch auf $R^{10}$.

Die Reste $\mathbf{R^6}$ sind Substituenten des Aromaten- und Heteroaromatenrestes **A** bzw. $\mathbf{A^1}$ und können sich beispielsweise, wenn **A** bzw. $\mathbf{A^1}$ ein aromatischer Sechsring ist, wie ein Phenylrest, in ortho-, meta- oder para-Stellung befinden.

Beispiele für zweiwertige Kohlenwasserstoffreste $\mathbf{R^7}$ und **Sp** sind gesättigte Alkylenreste wie der Methylen- und Ethylenrest sowie Propylen-, Butylen-, Pentylen-, Hexylen-, Cyclohexylen- und Octadecylenreste oder ungesättigte Alkylen-oder Arylenreste wie der Hexenylenrest und Phenylenreste.

Besonders bevorzugte Organosiloxane aus Einheiten der allgemeinen Formel 1 besitzen in der allgemeinen Formel 2 als Liganden **X** einen Triazen-, Pentazdien- oder Triazenoxid-Liganden $ANNNR^1$, $ANNNNNA^1$ und $ANNNOR^1$, bei denen **A** und $\mathbf{A^1}$ Phenyl-, Naphthyl- und Furanylreste und $\mathbf{R^1}$ Methyl-, Hexyl-, Octyl- und Dodecylreste sind.

Bevorzugte Ligandenreste Z sind $Sp-NR^{10}_2$ und $Sp-NR^{10}(R^7)NR^{10}_2$, wobei $\mathbf{R^{10}}$ ein Wasserstoffatom oder einen Alkylrest mit 1 bis 6 Kohlenstoffatomen und $\mathbf{R^7}$ einen Alkylenrest bedeuten.

**a** ist vorzugsweise 1, 2, 3 oder 4, **c** ist vorzugsweise 1 oder 2 und **b** ist vorzugsweise 0.

Besonders bevorzugte Organosiloxane aus Einheiten der allgemeinen Formel 3 besitzen in der allgemeinen Formel 4 als Ligandenrest **X'** einen Triazen-Ligandenrest ANNN-Sp, bei dem **A** einen p-Nitrophenyl oder p-Cyanophenylrest bedeutet.

**e** ist vorzugsweise 1 oder 2 und **f** ist vorzugsweise 0 oder 3.

Bei den Organosiloxanen aus Einheiten der allgemeinen Formeln 1 oder 3 bedeuten bevorzugte Reste **Sp** einen zweiwertigen Alkylenrest mit 2 bis 8 Kohlenstoffatomen, wobei der n-Propylenrest besonders bevorzugt ist.

Als Übergangsmetalle **M** sind Pt, Pd und Rh bevorzugt.

Bei den Organosiloxanen aus Einheiten der allgemeinen Formeln 1 oder 3 besitzen vorzugsweise in mindestens 50 Mol-%, insbesondere in mindestens 90 Mol-% der Einheiten **m** den Wert 0 und **n** den Wert 2. Insbesondere sind die erfindungsgemäßen Organosiloxane vorzugsweise linear.

Bevorzugte Beispiele für den Triazen-Liganden **X**, insbesondere ANNNR, sind solche der Formeln

$C_6H_5NNN(CH_2)_xCH_3$,
$p-NO_2-C_6H_4NNN(CH_2)_xCH_3$,
$p-CN-C_6H_4NNN(CH_2)_xCH_3$ und
$p-CH_3(CH_2)_x-C_6H_4NNN(CH_2)_xCH_3$,

wobei x 1, 3, 5, 7, 11 und 17, insbesondere 1, 5, 7 und 11, ist.

Bevorzugte Beispiele für die Liganden $ANNNNNA^1$ sind solche der Formeln

$p-Br-C_6H_4NNNNNC_6H_4-Br-p$ und
$p-CH_3O-C_6H_4NNNNNC_6H_4-OCH_3-p$.

Bevorzugte Beispiele für den Triazenoxid-Liganden X, insbesondere $ANNN(O)R^1$ sind solche der Formeln

$C_6H_5NNN(O)CH_3$ und
$p-CH_3(CH_2)_x-C_6H_4NNN(O)CH_3$.

Bevorzugte Beispiele für Katalysatoren sind solche der Formeln

$(C_6H_5NNN(CH_2)_5CH_3)_2PtH_2N(CH_2)_2NH(CH_2)_3-SiMe_2O(SiMe_2O)_{200}SiMe_2(CH_2)_3NH(CH_2)_2NH_2-$
$Pt(C_6H_5NNN(CH_2)_5CH_3)_2$ (Kat 1)

$(CH_3(CH_2)_3C_6H_4NNNOCH_3)_2PtH_2N(CH_2)_2NH(CH_2)_3SiMe_2O(SiMe_2O)_{57}SiMe_2(CH_2)_3NH(CH_2)_2NH_2-$
$Pt(CH_3(CH_2)_3C_6H_4NNNOCH_3)_2$ (Kat 2)

$(NCC_6H_4NNN(CH_2)_7CH_3)_2Pt-H_2N(CH_2)_2NH(CH_2)_3SiMe_2O(SiMe_2O)_{70}SiMe_2(CH_2)_3NH(CH_2)_2NH_2-$
$Pt(NCC_6H_4NNN(CH_2)_7CH_3)_2$ (Kat 3)

$(CH_3(CH_2)_3C_6H_4NNN(CH_2)_7CH_3)_2PtH_2N(CH_2)_3SiMe_2O(SiMe_2O)_{11}SiMe_2(CH_2)_3NH_2-$
$Pt(CH_3(CH_2)_3C_6H_4NNN(CH_2)_7CH_3)_2$ (Kat 4)

$(C_6H_5NNN(CH_2)_5CH_3)_2PdH_2N(CH_2)_2NH(CH_2)_3SiMe_2O(SiMe_2O)_{200}SiMe_2(CH_2)_3NH(CH_2)_2NH_2-$
$Pd(C_6H_5NNN(CH_2)_5C\ H_3)_2$ (Kat 5)

$(BrC_6H_4NNNNNC_6H_4Br)_2PtH_2N(CH_2)_2NH(CH_2)_3SiMe_2O(SiMe_2O)_{200}SiMe_2(CH_2)_3NH(CH_2)_2NH_2-$
$Pt(BrC_6H_4NNNNNC_6\ H_4Br)_2$ (Kat 6)

$\{Pt-NNNC_6H_4CN-(CH_2)_3-SiMe_2O(SiMe_2O)_{11}-SiMe_2(CH_2)_3-NCC_6H_4NNN\}_y$ $y = 7$ bis 8 (Kat 7)

$(PPh_3)_3Rh-NNNC_6H_4NO_2-(CH_2)_3-SiMe_2O(SiMe_2O)_{11}SiMe_2(CH_2)_3-O_2NC_6H_4NNN-Rh(PPh_3)_3$ (Kat 8)

Gegenstand der Erfindung ist weiterhin ein Verfahren zur Herstellung der erfindungsgemäßen Organosiloxane der vorstehenden allgemeinen Formel 1, bei dem Organosiloxane, welche mindestens einen gebundenen Übergangsmetallkomplex von Pt, Pd, Rh, Ru, Os oder Ir enthalten und welche aus mindestens zwei Einheiten der allgemeinen Formel 5,

$$G_m R_n SiO_{\frac{4-n-m}{2}} \quad (5),$$

aufgebaut sind, in der **G** einen Rest der allgemeinen Formel 6,

$MY_gZ_c$ (6),

bedeutet, wobei
**n, m, R, M, Y, Z** und **c** die vorstehenden Bedeutungen aufweisen und
**g** eine ganze Zahl von 1 bis 8 bedeutet,
in Gegenwart einer Base mit Triazen-, Tetrazen-, Pentazdien- oder Triazenoxid-Verbindungen, ausgewählt aus der Gruppe von
$ANNNHR^1$, $ANNNHR^2$, $ANNNHA^1$, $ANHNNNHA^1$, $ANNNHNNA^1$ und $ANNNOHR^1$,
oder ohne Base mit Triazen-, Tetrazen-, Tetrazdien-, Pentazdien- oder Triazenoxid-Verbindungen, ausgewählt aus der Gruppe von
$ANNNR^1R^2$, $ANNNR^1A^1$, $ANR^2NNNR^3A^1$, $ANNNR^4NNA^1$ und $ANNNNA^1$,
wobei
$\mathbf{R^1}$, $\mathbf{R^2}$, $\mathbf{R^3}$, $\mathbf{R^4}$, **A** und $\mathbf{A^1}$ die vorstehenden Bedeutungen aufweisen,
umgesetzt werden.

Gegenstand der Erfindung ist weiterhin ein Verfahren zur Herstellung der erfindungsgemäßen Organosiloxane der vorstehenden allgemeinen Formel 3, bei dem Organosiloxane, welche mindestens einen Triazen-, Tetrazen-, Pentazdien- oder Triazenoxidrest enthalten und welche aus mindestens zwei Einheiten der allgemeinen Formel 7,

$$X''_m R_n SiO_{\frac{4-n-m}{2}} \quad (7),$$

aufgebaut sind, in der
**X"** einen Triazen-, Tetrazen- oder Triazenoxidrest, ausgewählt aus der Gruppe von
ANNNHSp, $ANHNNNSpA^1$ und ANNNOHSp,
bedeutet,
in Gegenwart einer Base mit einem Übergangsmetallhalogenkomplex der allgemeinen Formel 8,

$MY_hHal_i$ (8),

oder
**X"** einen Triazen-, Tetrazen-, Pentazdien- oder Triazenoxidrest, ausgewählt aus der Gruppe von
ANNNRSp, ANNSpNA, $ANSpNNNR^3A^1$, und $ANNNSpNNA^1$,
bedeutet,
ohne Base mit einem Übergangsmetallkomplex der allgemeinen Formel 9,

$MY_j$ (9),

wobei
**A**, $\mathbf{A^1}$, **Sp, R, H, Y, m** und **n** die vorstehenden Bedeutungen aufweisen,
Hal ein Chlor- Brom- oder Iodatom,
**h** 1, 2, 3 oder 4,
**i** 0 oder eine ganze Zahl von 1 bis 6 und
**j** eine ganze Zahl von 1 bis 8 bedeutet,
umgesetzt werden.

Beispiele für Basen, die bei Herstellung der Organosiloxane der allgemeinen Formeln 1 und 3 eingesetzt werden, sind n-Butyllithium, Triethylamin, Piperidin, Pyridin, $NaOcH_3$ und $NaNH_2$, wobei n-Butyllithium und Triethylamin bevorzugt sind.

Das Verfahren zur Herstellung der Organosiloxane der allgemeinen Formeln 1 und 3 wird vorzugsweise in Gegenwart von organischen Lösungsmitteln, wie n-Hexan, Toluol, Methylenchlorid, Chloroform, Aceton oder Tetrahydrofuran, durchgeführt, kann aber auch in Gegenwart eines Gemisches aus Wasser und organischem Lösungsmittel, wie Methanol, Ethanol, Isopropanol oder vorzugsweise Tetrahydrofuran (THF), durchgeführt werden.

Das Verfahren zur Herstellung der Organosiloxane der allgemeinen Formeln 1 und 3 wird vorzugsweise bei Temperaturen von -20 °C bis 30 °C, beim Druck der umgebenden Atmosphäre und unter Lichtausschluß durchgeführt. Das organische Lösungsmittel bzw. das Gemisch aus organischem Lösungsmittel und Wasser wird vorzugsweise nach der Umsetzung entfernt.

Die Herstellung der Triazenido-Komplexe von Übergangsmetallen - mit Ausnahme der Aryl-alkyl-triazenido-Komplexe von Übergangsmetallen -, der Tetrazenido-Komplexe von Übergangsmetallen, der Tetrazdienido-Komplexe von Übergangsmetallen und der Pentazdienido-Komplexe von Übergangsmetallen ist bekannt und in D.S. Moore et al., Advances in Inorganic Chemistry and Radiochemistry, Vol. 30, Seiten 1 - 68, 1986, beschrieben.

Die Herstellung der Triazene, Tetrazene, Tetrazdiene und Pentazdiene ist bekannt und in T.P. Ahern et al., Can. J. Chem. 55, 1701 (1977), und M.A. Kelly et al., J. Chem. Soc., Perkin Trans. II, 1649 (1982), beschrieben.

Beispiele für Triazene der Formel $ANNNHR^1$, die bei der Herstellung der Aryl-alkyl-Triazenido-Komplexe der allgemeinen Formel 6 eingesetzt werden, sind
$C_6H_5NNNH(CH_2)_xCH_3$,
p-$NO_2$-$C_6H_4NNNH(CH_2)_xCH_3$,
p-CN-$C_6H_4NNNH(CH_2)_xCH_3$,
p-$CH_3$-$C_6H_4NNNH(CH_2)_xCH_3$,
p-$CH_3(CH_2)_x$-$C_6H_4NNNH(CH_2)_xCH_3$,
p-$H_3COCO$-$C_6H_4NNNH(CH_2)_xCH_3$,
p-$CH_3NHCO$-$C_6H_4NNNH(CH_2)_xCH_3$,
p-$CH_3O$-$C_6H_4NNNH(CH_2)_xCH_3$,
p-$(CH_3)_2N$-$C_6H_4NNN(CH_2)_xCH_3$,
wobei $C_6H_5NNNH(CH_2)_xCH_3$,
p-$NO_2$-$C_6H_4NNNH(CH_2)_xCH_3$,
p-CN-$C_6H_4NNNH(CH_2)_xCH_3$ und
p-$CH_3$ $(CH_2)_x$-$C_6H_4NNNH(CH_2)_xCH_3$.
Vorzugsweise ist x 1, 3, 5, 7, 11 und 17, insbesondere 1, 5, 7 und 11.

Die Organosiloxane aus Einheiten der vorstehenden allgemeinen Formel 5 können hergestellt werden aus Organosiloxanen aus mindestens zwei Einheiten der allgemeinen Formel 10,

$$Z_mR_nSiO_{\frac{4-n-m}{2}} \qquad (10),$$

in der

**Z, R, m** und **n** die vorstehenden Bedeutungen aufweisen, durch Umsetzung mit Übergangsmetallkomplexen der vorstehenden allgemeinen Formel 9.

Beispiele für Übergangsmetallverbindungen der vorstehenden allgemeinen Formel 8 sind
$PtCl_2$, $PtJ_2$, $[(C_6H_5)_3P]_2PtCl_2$, $[(C_2H_5)_3P]_2PtCl_2$, $PtCl_4$, $Pt(H_2NCH_2CH_2NH_2)Cl_2$, $Pt(NH_3)_2Cl_2$, $PtBr_2$, $PtJ_2$, $Na_2PtCl_4$, $Na_4PtCl_6$, 1,5-Cyclooctadien•$PtCl_2$, $Pd(CH_3CN)_2Cl_2$, $PdBr_2$, 1,5-Cyclooctadien•$PdCl_2$, $[(C_6H_5)_3P]_2PdCl_2$, $PdCl_2$, $RuCl_3$, $Ru(NH_3)_6Cl_2$, $[(C_6H_5)_3P]_3RuCl_2$, $RhCl_3$, $RhBr_3$, $[(C_6H_5)_3P]_3RhCl$, (1,5-Cyclooctadien)$_2$Pt, 1,3-Divinyl-1,1,3,3-tetramethyldisiloxanplatinkomplex (z.B. $Pt_2$[1,3-divinyl-1,1,3,3-tetramethyldisiloxan]$_3$),Pd[bis-(1,2-diphenyl-phosphinoethan)], Hexarhodiumhexadecacarbonyl und Trirutheniumdodecacarbonyl, wobei $PtCl_4$, 1,5-Cyclooctadien•$PtCl_2$, $PtJ_2$, 1,3-Divinyl-1,1,3,3-tetramethyldisiloxanplatinkomplex, $PdCl_2$, $[(C_6H_5)_3P]_3RuCl_2$ und $[(C_6H_5)_3P]_3RhCl$ bevorzugt sind.

Die Organosiloxane aus Einheiten der vorstehenden allgemeinen Formel 7 können hergestellt werden aus Organosiloxanen aus mindestens zwei Einheiten der allgemeinen Formel 11

$$(H_2NSp)_mSiO_{\frac{4-n-m}{2}} , \qquad (11)$$

wobei

**Sp, R, n** und **m** die vorstehenden Bedeutungen aufweisen, durch Umsetzung mit den entsprechenden Diazoniumsalzen. Für die Herstellung der Triazenidosiloxane der allgemeinen Formel 11 wird beispielsweise das Diazoniumsalz der Formel $AN_2^+ BF_4^-$ eingesetzt, wobei **A** die vorstehenden Bedeutungen aufweist.

Die erfindungsgemäßen Organosiloxane können in allen vernetzbaren Organopolysiloxanzusammensetzungen als Katalysatoren verwendet werden, in denen auch bisher Katalysatoren verwendet werden konnten, die die Anlagerung von Si-gebundenem Wasserstoff an aliphatische Mehrfachbindung fördern. Die erfindungsgemäßen Organosiloxane können durch Erhitzen bei Temperaturen von 50°C bis 250°C und/oder durch Bestrahlen mit Licht aktiviert werden.

Gegenstand der Erfindung sind daher vernetzbare Organopolysiloxanzusammensetzungen enthaltend

(A) Organopolysiloxane, die Reste mit aliphatischen Kohlenstoff-Kohlenstoff-Mehrfachbindungen aufweisen,

(B) Organopolysiloxane mit Si-gebundenen Wasserstoffatomen oder anstelle von (A) und (B)

(C) Organopolysiloxane, die Reste mit aliphatischen Kohlenstoff-Kohlenstoff-Mehrfachbindungen und Si-gebundene Wasserstoffatome aufweisen, und

(D) als Katalysatoren erfindungsgemäße Organosiloxane.

Unter Resten mit aliphatischen Kohlenstoff-Kohlenstoff-Mehrfachbindungen sind auch Reste mit cycloaliphatischen Kohlenstoff-Kohlenstoff-Mehrfachbindungen zu verstehen.

Als Organopolysiloxane (A), die Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel 11,

$$R^8_k R^9_l SiO_{\frac{4-k-l}{2}} \qquad (11),$$

wobei

$\mathbf{R^8}$ einen einwertigen von aliphatischen Kohlenstoff-Kohlenstoff-Mehrfachbindungen freien Kohlenwasserstoffrest mit 1 bis 18 Kohlenstoffatomen je Rest und

$\mathbf{R^9}$ einen einwertigen Kohlenwasserstoffrest mit aliphatischer Kohlenstoff-Kohlenstoff-Mehrfachbindung mit 2 bis 8 Kohlenstoffatomen je Rest bedeutet,

**k** 0, 1, 2 oder 3,

**l** 0, 1 oder 2

und die Summe **k+l** 0, 1, 2 oder 3 ist,

mit der Maßgabe, daß durchschnittlich mindestens 2 Reste $\mathbf{R^9}$ je Molekül vorliegen, verwendet. Die Organopolysiloxane (A) besitzen vorzugsweise eine durchschnittliche Viskosität von 100 bis 10 000 mPa•s bei 25°C.

Beispiele für Kohlenwasserstoffreste $\mathbf{R^8}$ sind Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest.

Beispiele für Reste $\mathbf{R^9}$ sind Alkenylreste, wie der Vinyl-, 5-Hexenyl-, 1-Propenyl-, Allyl-, 1-Butenyl- und 1-Pentenylrest und Alkinylreste, wie der Ethinyl-, Propargyl- und 1-Propinylrest.

Als Organopolysiloxane (B), die Si-gebundene Wasserstoffatome aufweisen, werden vorzugsweise lineare, cyclische oder verzweigte Organopolysiloxane aus Einheiten der allgemeinen Formel 12,

$$R^8_oH_pSiO_{\frac{4-o-p}{2}} \qquad (12),$$

wobei
**R**⁸ die oben dafür angegebene Bedeutung hat,
**o** 0, 1, 2 oder 3,
**p** 0, 1 oder 2
und die Summe von **o+p** 0, 1, 2 oder 3 ist,
mit der Maßgabe, daß durchschnittlich mindestens 2 Si-gebundene Wasserstoffatome je Molekül vorliegen, verwendet. Die Organopolysiloxane (B) besitzen vorzugsweise eine durchschnittliche Viskosität von 10 bis 1 000 mPa•s bei 25°C.

Als Organopolysiloxane (C), die aliphatische Kohlenstoff-Kohlenstoff-Mehrfachbindungen und Si-gebundene Wasserstoffatome aufweisen und anstelle von Organopolysiloxanen (A) und (B) verwendet werden können, werden vorzugsweise solche aus Einheiten der allgemeinen Formeln

$$R^8_qSiO_{\frac{4-q}{2}}, \qquad R^8_rR^9SiO_{\frac{3-r}{2}} \quad \text{und} \quad R^8_sHSiO_{\frac{3-s}{2}},$$

wobei
$R^8$ und $R^9$ die oben dafür angegebene Bedeutung haben,
**q** 0, 1, 2 oder 3,
**r** 0, 1 oder 2,
**s** 0, 1 oder 2 ist,
mit der Maßgabe, daß je Molekül durchschnittlich mindestens 2 Reste $R^8$ und durchschnittlich mindestens 2 Si-gebundene Wasserstoffatome vorliegen, verwendet.

Beispiele für Organopolysiloxane (C) sind solche aus $SiO_{4/2}$-, $R^8_3SiO_{1/2}$-, $R^8_2R^9SiO_{1/2}$- und $R^8_2HSiO_{1/2}$-Einheiten, sogenannte MQ-Harze, wobei diese Harze T-Einheiten ($R^8SiO_{3/2}$) und D-Einheiten ($R^8_2SiO$) enthalten können.

Die Organopolysiloxane (C) besitzen vorzugsweise eine durchschnittliche Viskosität von 100 bis 100 000 mPa•s bei 25°C bzw. sind Feststoffe mit Molekulargewichten von 5 000 bis 50 000 g/mol.

Ab einer Molmasse von 1 000 g/mol sind die Flüchtigkeit und Migrationsfähigkeit der als Katalysatoren eingesetzten, erfindungsgemäßen Organosiloxane D sehr gering.

Die erfindungsgemäßen Organosiloxane (D) werden vorzugsweise in Mengen von 1 bis 1 000 Gew.-ppm (Gewichtsteilen je Million Gewichtsteilen), bevorzugt 10 bis 100 Gew.-ppm, jeweils berechnet als elementares Übergangsmetall Pt, Pd, Ru, Rh, Os oder Ir und bezogen auf das Gesamtgewicht der Organopolysiloxane (A) und (B) bzw. auf das Gesamtgewicht der Organopolysiloxane (C), eingesetzt.

Obwohl nicht bevorzugt, können bei den vernetzbaren Organopolysiloxanzusammensetzungen Inhibitoren mitverwendet werden. Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung gemäß US-A 3,445,420, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, Inhibitoren gemäß US-A 2,476,166, wie eine Mischung aus Diallylmaleinat und Vinylacetat, und Inhibitoren gemäß US-A 4,504,645, wie Maleinsäuremonoester.

Die erfindungsgemäßen Organosiloxane können weiterhin bei allen Verfahren zur Umsetzung von Si-gebundene Wasserstoffatome aufweisenden Organosiliciumverbindungen mit aliphatischen Mehrfachbindungen aufweisenden organischen Verbindungen eingesetzt werden, bei denen auch bisher die Anlagerung von Si-gebundenem Wasserstoff an aliphatische Mehrfachbindung fördernde Katalysatoren eingesetzt werden konnten. Unter organischen Verbindungen mit aliphatischen Mehrfachbindungen sind auch organische Verbindungen mit cycloaliphatischen Mehrfachbindungen zu verstehen.

Beispiele für Si-gebundene Wasserstoffatome aufweisende Organosiliciumverbindungensind Silane mit einem Si-gebundenen Wasserstoffatom je Molekül, wie Trichlorsilan, Dimethylchlorsilan, Dimethylethoxysilan, Methyldiethoxysilan, Methyldichlorsilan und Triethoxysilan, und Organopolysiloxane mit mindestens einem Si-gebundenen Wasserstoffatom je Molekül, wie $\alpha,\omega$-Dihydrogen[dimethylpolysiloxan], Tetramethyldisiloxan, Tetramethylcyclotetrasiloxan, Mischpolymerisate aus Trimethylsiloxan- und Methylhydrogensiloxaneinheiten, Mischpolymerisate aus Trimethylsiloxan-, Dimethylsiloxan- und Methylhydrogensiloxaneinheiten und Trimethylsiloxyhydrogensilan.

Beispiele für aliphatische Mehrfachbindungen aufweisende organische Verbindungen sind Verbindungen mit aliphatischer Kohlenstoff-Kohlenstoff-Doppelbindung, wie Styrol, Allylglycidether, Allylcyanid, Allylacetat, Allylbernsteinsäureanhydrid, Glycolmonoallylether, Allylmethacrylat, Allylamin und Cyclohexen und Verbindungen mit aliphatischer Kohlenstoff-Kohlenstoff-Dreifachbindung, wie Acetylen und Butinol.

In den nachfolgenden Beispielen sind, falls jeweils nicht anders angegeben,

a) alle Mengenangaben auf das Gewicht bezogen;
b) alle Drücke 0,10 MPa (abs.);
c) alle Temperaturen 20 ° C.

Beispiele

Herstellung der Triazene (im wäßrigen System):

0,25 mol des jeweils in nachstehender Tabelle 1 genannten Anilin-Derivats wurden in 200 ml 10 %iger wäßriger Salzsäure gelöst, dann mit 1 g Aktivkohle 5 Minuten gerührt, und filtriert. Das Filtrat wurde bei 0 ° C unter Lichtausschluß mit einer Lösung von 17,25 g (0,25 mol) Natriumnitrit in 30 g Wasser versetzt. Nach 15 Minuten wurde bei 0 ° C 1 mol des jeweils in Tabelle 1 genannten Alkylamins zugetropft und bei Raumtemperatur 2 Stunden gerührt. Nach Zugabe von organischem Lösungsmittel wurde mit 3 x 50 ml Wasser (bzw. bei Bedarf mit verdünnter Essigsäure) ausgeschüttelt und die organische Phase über Natriumsulfat getrocknet. Nach der Filtration wurde bei Raumtemperatur im Rotationsverdampfer unter reduziertem Druck eingeengt. Mögliche Anteile von Pentazdiennebenprodukten können in methanolischer Lösung bei -65 ° C als Feststoff abgetrennt werden. Es wurden die in Tabelle 1 genannten Produkte mit Ausbeuten zwischen 60 % und 80 % erhalten.

Herstellung der Triazene (im organischen System):

0,2 mol des jeweils in Tabelle 1 genannten Anilin-Derivats wurden in 100 ml Aceton gelöst, dann mit 1 g Aktivkohle 5 Minuten gerührt und filtriert. Das Filtrat wurde bei -5 ° C unter Licht- und Feuchtigkeitsausschluß mit 24,59 g (0,25 mol) wasserfreier Schwefelsäure versetzt und 20 Minuten gerührt. Dann wurden 20,62 g (0,2 mol) n-Butylnitrit zugetropft und weitere 2 Stunden bei 0 ° C gerührt. Schließlich wurden 0,5 mol des jeweils in Tabelle 1 genannten Alkylamins zugetropft und nochmals 2 Stunden gerührt. Die organische Phase wurde dreimal mit 50 ml wäßriger Salzsäure ausgeschüttelt, über Natriumsulfat getrocknet und am Rotationsverdampfer unter reduziertem Druck bis zur Gewichtskonstanz eingeengt. Es wurden die in Tabelle 1 genannten Produkte in Ausbeuten zwischen 70 % und 80 % erhalten.

Tabelle 1

| Anilin-Derivat | Alkylamin | Triazen |
|---|---|---|
| Anilin | n-Hexylamin | 1-Phenyl-3-n-hexyl-1-triazen |
| p-Nitroanilin | n-Octylamin | 1-[4-Nitrophenyl]-3-n-octyl-1-triazen |
| p-Cyanoanilin | n-Octylamin | 1-[4-Cyanophenyl]-3-n-octyl-1-triazen |
| p-Butylanilin | n-Octylamin | 1-[4-Butylphenyl]-3-n-octyl-1-triazen |
| p-Butylanilin | Methylhydroxylamin | 1-[4-Butylphenyl]-3-methyl-1-triazen-3-oxid |

Herstellung der Pentazdiene:

20 mmol des jeweils in Tabelle 2 genannten Anilin-Derivats wurden in 40 ml 10 %iger wäßriger Salzsäure (109 mmol) gelöst, mit 0,5 g Aktivkohle 5 Minuten gerührt und filtriert. Das Filtrat wurde bei -5 ° C unter Lichtausschluß mit einer Lösung von 1,38 g (20 mmol) Natriumnitrit in 10 ml Wasser versetzt, und

nach 15 Minuten wurden bei 0 °C 10 ml einer 25 %igen Ammoniaklösung (147 mmol) zudosiert. Bei Raumtemperatur wurde eine Stunde gerührt. Nach Zugabe von 100 ml organischem Lösungsmittel wurde dreimal mit 50 ml Wasser (bzw. bei Bedarf mit verdünnter Essigsäure) ausgeschüttelt und die organische Phase über Natriumsulfat getrocknet. Die Pentazdiene wurden ohne Aufreinigung (Explosionsgefahr) mit den Übergangsmetallen umgesetzt.

Tabelle 2

| Anilin-Derivat | Produkt |
|---|---|
| Anilin | 1,5-Diphenyl-1,4-pentazdien |
| p-Brom-Anilin | 1,5-Di[4-bromphenyl]-1,4-pentazdien |
| p-Methoxy-Anilin | 1,5-Di[4-methoxyphenyl]-1,4-pentazdien |

Herstellung der Katalysatorvorstufen V1:

1 mmol der α,ω-Aminoethylaminopropyldimethylpolysiloxane (Kettenlänge 57, 70, 200) wurde in 100 - 500 ml THF (Tetrahydrofuran) gelöst, dann mit 2 mmol (0,75 g) Cyclooctadiendichloroplatin (II) oder 2 mmol (0,355 g) Palladiumdichlorid versetzt und 4 - 8 Stunden unter Rückfluß erwärmt und anschließend filtriert. Das Filtrat wurde im Hochvakuum bei 100 °C bis zur Gewichtskonstanz eingeengt. Die gelben, öligen bis elastisch festen Produkte wurden in Ausbeuten zwischen 90 % und 99 % erhalten.

Herstellung der Katalysatorvorstufen V2:

1 mmol der α,ω-Aminopropyldimethylpolysiloxane (Kettenlänge 11, 70) wurden in 100 - 300 ml THF gelöst, dann mit 2 mmol (0,75 g) Cyclooctadiendichloroplatin (II) versetzt, 4 - 8 Stunden unter Rückfluß erwärmt und anschließend filtriert. Das Filtrat wurde im Hochvakuum bei 100 °C bis zur Gewichtskonstanz eingeengt. Die elastisch festen Produkte wurden in Ausbeuten zwischen 90 % und 95 % erhalten.

Herstellung der Katalysatorvorstufen V3:

66,3 mmol des jeweils in Tabelle 1 genannten Anilin-Derivates wurden in 250 ml 10 %iger Salzsäure gelöst, dann mit 1 g Aktivkohle 5 Minuten gerührt und filtriert. Das Filtrat wurde bei 0 °C unter Lichtausschluß mit einer Lösung von 4,58 g (66,3 mmol) Natriumnitrit in 10 ml Wasser versetzt. Nach 15 Minuten wurden bei 0 °C 7,5 g (66,3 mmol) Natriumtetrafluoroborat in 20 ml Wasser gelöst zugegeben und 30 Minuten bei -5 °C gerührt. Der Niederschlag wurde abgesaugt und zu einer Lösung von 22,1 mmol α,ω-Aminopropyldimethylsiloxan (Kettenlänge 11, 70), 6,7 g (66,3 mmol) Triethylamin in 50 g THF bei -5 °C gegeben. Innerhalb von 3 Stunden färbte sich die Lösung tiefrot. Nach der Filtration wurde bei Raumtemperatur im Rotationsverdampfer unter reduziertem Druck eingeengt, mit Diethylether versetzt und das Produkt bei 4 °C 24 Stunden gelagert. Nach einer Druckfiltration und Evaporation des Lösungsmittels erhielt man gelb- bis rotgefärbte Öle in 80 - 90 %iger Ausbeute.

V1: $Cl_2WH_2NCH_2CH_2NH(CH_2)_3SiMe_2O(SiMe_2O)_xSiMe_2(CH_2)_3\text{-}NH(CH_2)_2NH_2PtCl_2$
x = 57, 70, 200 W = Pd, Pt

V2: $Cl_2PtH_2N(CH_2)_3SiMe_2O(SiMe_2O)_xSiMe_2(CH_2)_3NH_2PtCl_2$
x = 11, 70

V3: $R^{11}C_6H_4NNNH(CH_2)_3SiMe_2O(SiMe_2O)_xSiMe_2(CH_2)_3NHNNC_6H_4R^{11}$
x = 11, 70 $R^{11}$ = -CN, $-CH_3$, $-NO_2$, -Cl oder $-OCH_3$

Beispiel 1

1,02 g (5 mmol) 1-Phenyl-3n-hexyl-1-triazen, dessen Herstellung oben beschrieben wurde, wurden unter Lichtausschluß mit 20 ml wasserfreiem THF bei -10 °C vorgelegt. Unter Stickstoffatmosphäre wurden langsam 3,43 ml einer 1,6 molaren Lösung von n-Butyllithium (5,5 mmol) in n-Hexan zudosiert. Nach 20 Minuten wurde eine Lösung von 15,69 g (1 mmol) α,ω-Platindichloroaminoethylaminopropylpolydimethylsiloxan (V1) der Kettenlänge 200 in 200 ml THF zugetropft und 72 Stunden bei Raumtemperatur gerührt. Die Lösung wurde bei Raumtemperatur und bei reduziertem Druck einrotiert, der Rückstand in 30 ml Toluol aufgenommen, filtriert und das Filtrat in 400 ml Methanol

gegeben und kräftig gerührt. Nach dem Dekantieren des überstehenden Methanols wurde die Prozedur wiederholt. Das hochviskose, gelb bis rot gefärbte, sedimentierte Produkt wurde im Hochvakuum bei Raumtemperatur bis zur Gewichtskonstanz eingeengt. Es wurden 13,1 g (80 % Ausbeute) roter, hochviskoser Katalysator Kat 1 erhalten.

Beispiel 2

Die Arbeitsweise von Beispiel 1 wurde wiederholt mit der Änderung, daß 1,04 g (5 mmol) 1-p-n-Butylphenyl-3-n-methyl-1-triazen-3-hydroxid anstelle von 5 mmol 1-Phenyl-3-methyl-1-triazen, 5,08 g (1 mmol) $\alpha,\omega$-Platindichloroaminoethylaminopropylpolydimethylsiloxan der Kettenlänge 57 (V1) anstelle von 1 mmol V1 der Kettenlänge 200 eingesetzt wurden. Es wurden 5,3 g (92 % Ausbeute) des gelben, öligen Katalysators Kat 2 erhalten.

Beispiel 3

Die Arbeitsweise von Beispiel 1 wurde wiederholt mit der Änderung, daß 1,29 g (5 mmol) 1-p-Cyanophenyl-3-n-octyl-1-triazen anstelle von 5 mmol 1-Phenyl-3-n-hexyl-1-triazen, 6,05 g (1 mmol) $\alpha,\omega$-Platindichloroaminoethylaminopropylpolydimethylsiloxan der Kettenlänge 70 (V1) anstelle von 1 mmol V1 der Kettenlänge 200 eingesetzt wurden. Es wurden 5,90 g (85 % Ausbeute) des gelben, öligen Katalysators Kat 3 erhalten.

Beispiel 4

Die Arbeitsweise von Beispiel 1 wurde wiederholt mit der Änderung, daß 1,44 g (5 mmol) 1-p-n-Butylphenyl-3-n-octyl-1-triazen anstelle von 5 mmol 1-Phenyl-3-n-hexyl-1-triazen, 1,55 g (1 mmol) $\alpha,\omega$-Platindichloroaminopropylpolydimethylsiloxan (V2) der Kettenlänge 11 anstelle von 1 mmol V1 der Kettenlänge 200 eingesetzt wurden. Es wurden 2,1 g (82 % Ausbeute) des gelben, festen Katalysators Kat 4 erhalten.

Beispiel 5

Die Arbeitsweise von Beispiel 1 wurde wiederholt mit der Änderung, daß anstelle von 1 mmol V1 der Kettenlänge 200 mit Platin als Zentralatom 16,19 g (1 mmol) $\alpha,\omega$-Palladiumdichloroaminoethylaminopropylpolydimethylsiloxan V1 der Kettenlänge 200 eingesetzt wurden. Es wurden 13,5 g (80 % Ausbeute) des gelben, festen Katalysators 5 erhalten.

Beispiel 6

Die Arbeitsweise von Beispiel 1 wurde wiederholt mit der Änderung, daß 1,92 g (5 mmol) 1,5-p-Bromphenylpentaz-1,4-dien anstelle von 5 mmol 1-Phenyl-3-n-hexyl-1-triazen eingesetzt wurden. Es wurden 14,0 g (82 % Ausbeute) des gelben, öligen Katalysators Kat 6 erhalten.

Beispiel 7

1,28 g (1 mmol) $\alpha,\omega$-1-p-Cyanophenyl-3-n-propyl-1-triazenpolydimethylsiloxan der Kettenlänge 11 (V3 mit $R^{11}$ = CN) wurden unter Lichtausschluß mit 30 ml wasserfreiem THF bei -10°C vorgelegt. Unter Stickstoffatmosphäre wurden langsam 1,56 ml (2,5 mmol) einer 1,6 molaren Lösung von n-Butyllithium in n-Hexan zudosiert. Nach 40 Minuten wurden 0,27 g (1 mmol) Platindichlorid zugegeben und 72 Stunden bei Raumtemperatur gerührt. Die Lösung wurde bei Raumtemperatur und bei reduziertem Druck einrotiert, in 40 ml Diethylether aufgenommen, 24 Stunden bei 4°C gelagert, filtiert und schließlich im Hochvakuum bei Raumtemperatur bis zur Gewichtskonstanz eingeengt. Es wurden 1,25 g (85 % Ausbeute) roter, hochviskoser Katalysator Kat 7 erhalten.

Beispiel 8

Die Arbeitsweise von Beispiel 7 wurde wiederholt mit der Änderung, daß 1,33 g (1 mmol) $\alpha,\omega$-1-p-Nitrophenyl-3-n-propyl-1-triazenpolydimethylsiloxan der Kettenlänge 11 mit $R^{11}$ = $NO_2$ (V3) anstelle von 1 mmol V3 mit $R^{11}$ = CN und 1,85 g (2 mmol) Tris[triphenylphosphin]rhodiumchlorid anstelle von 1 mmol

Platindichlorid eingesetzt wurden. Es wurden 2,33 g (75 % Ausbeute) des roten, öligen Katalysators Kat 8 erhalten.

Beispiel 9

32 mg (1,959 x $10^{-6}$ mol) Kat 1 wurden in 0,5 ml THF gelöst und dann zu 7,46 g $\alpha,\omega$-Divinyldimethylpolysiloxan mit einer Viskosität von 500 mPa•s bei 25 °C gegeben. Das Lösungsmittel wurde bei Raumtemperatur unter reduziertem Druck entfernt. Zur verbleibenden Reaktionsmischung wurden 0,187 g eines Mischpolymerisats aus Trimethylsiloxan- und Methylhydrogensiloxaneinheiten mit einer Viskosität von 33 mPa•s bei 25 °C, das 1,12 Gew.-% Si-gebundenen Wasserstoff enthält, gegeben, so daß die Mischung 100 Gew.-ppm Platin, berechnet als Element, enthielt. Die gesamte Mischung war bei Raumtemperatur und unter Lichtausschluß mindestens 6 Wochen stabil. Nach 15 Minuten Bestrahlen mit Ultraviolettlicht (UVA = 56 mW/$cm^2$, UVB = 12 mW/$cm^2$) wurde eine komplette Vernetzung der Masse (die extrahierbaren Anteile, d.h. die nicht vernetzten Anteile, sind weniger als 5 Gew.-%) erzielt. Es wurde ein transparentes, in organischen Lösungsmitteln unlösliches Produkt erhalten.

Beispiel 10

Die Arbeitsweise von Beispiel 9 wurde wiederholt mit der Abänderung, daß nach 73 Minuten Erwärmen bei 80 °C eine komplette Vernetzung der Masse (die extrahierbaren Anteile, d.h. die nicht vernetzten Anteile, sind weniger als 5 Gew.-%) erzielt wurde. Es wurde ein transparentes, in organischen Lösungsmitteln unlösliches Produkt erhalten.

Beispiel 11

Die Arbeitsweise von Beispiel 9 wurde wiederholt mit der Abänderung, daß nach 12,5 Minuten Erwärmen bei 100 °C eine komplette Vernetzung der Masse (die extrahierbaren Anteile, d.h. die nicht vernetzten Anteile, sind weniger als 5 Gew.-%) erzielt wurde. Es wurde ein transparentes, in organischen Lösungsmitteln unlösliches Produkt erhalten.

Beispiel 12

Die Arbeitsweise von Beispiel 9 wurde wiederholt mit der Abänderung, daß nach 4,9 Minuten Erwärmen bei 120 °C eine komplette Vernetzung der Masse (die extrahierbaren Anteile, d.h. die nicht vernetzten Anteile, sind weniger als 5 Gew.-%) erzielt wurde. Es wurde ein transparentes, in organischen Lösungsmitteln unlösliches Produkt erhalten.

Beispiel 13

Die Arbeitsweise von Beispiel 9 wurde wiederholt mit der Abänderung, daß ein $\alpha,\omega$-Divinyldimethylpolysiloxan mit einer Viskosität von 1 000 mPa•s bei 25 °C anstelle von 500 mPa•s bei 25 °C eingesetzt wurde. Nach 15 Minuten Bestrahlen mit Ultraviolettlicht (UVA = 56 mW/$cm^2$, UVB = 12 mW/$cm^2$) wurde eine komplette Vernetzung der Masse (die extrahierbaren Anteile, d.h. die nicht vernetzten Anteile, sind weniger als 5 Gew.-%) erzielt. Es wurde ein transparentes, in organischen Lösungsmitteln unlösliches Produkt erhalten.

Beispiel 14

Die Arbeitsweise von Beispiel 9 wurde wiederholt mit der Abänderung, daß 11,53 mg (3,7 x $10^{-6}$ mol) Kat 8 anstelle von 32 mg Kat 1 eingesetzt wurden. Die Mischung enthielt 100 Gew.-ppm Rhodium, berechnet als Element. Die gesamte Mischung war bei Raumtemperatur und unter Lichtausschluß mindestens 9 Wochen stabil. Nach 31 Minuten Erwärmen bei 180 °C wurde eine komplette Vernetzung der Masse (die extrahierbaren Anteile, d.h. die nicht vernetzten Anteile, sind weniger als 5 Gew.-%) erzielt. Es wurde eine klare spröde Masse erhalten.

Beispiel 15

Die Arbeitsweise von Beispiel 14 wurde wiederholt mit der Abänderung, daß ein α,ω-Divinyldimethylpolysiloxan mit einer Viskosität von 1 000 mPa•s bei 25°C anstelle von 500 mPa•s bei 25°C eingesetzt wurde. Die gesamte Mischung war bei Raumtemperatur und unter Lichtausschluß mindestens 9 Wochen stabil. Nach 31 Minuten Erwärmen bei 180°C wurde eine komplette Vernetzung der Masse (die extrahierbaren Anteile, d.h. die nicht vernetzten Anteile, sind weniger als 5 Gew.-%) erzielt. Es wurde eine klare spröde Masse erhalten.

Beispiel 16

Die Arbeitsweise von Beispiel 9 wurde wiederholt mit der Abänderung, daß 58,17 mg ($3,593 \times 10^{-6}$ mol) Kat 5 anstelle von 32 mg Kat 1 eingesetzt wurden. Die Mischung enthielt 100 Gew.-ppm Palladium, berechnet als Element. Die gesamte Mischung war bei Raumtemperatur und unter Lichtausschluß mindestens 9 Wochen stabil. Nach 13 Minuten Erwärmen bei 170°C wurde eine komplette Vernetzung der Masse (die extrahierbaren Anteile, d.h. die nicht vernetzten Anteile, sind weniger als 5 Gew.-%) erzielt. Es wurde eine klare spröde Masse erhalten.

Beispiel 17

Die Arbeitsweise von Beispiel 16 wurde wiederholt mit der Abänderung, daß ein α,ω-Divinyldimethylpolysiloxan mit einer Viskosität von 1 000 mPa•s bei 25°C anstelle von 500 mPa•s bei 25°C eingesetzt wurde. Die gesamte Mischung war bei Raumtemperatur und unter Lichtausschluß mindestens 9 Wochen stabil. Nach 13 Minuten Erwärmen bei 170°C wurde eine komplette Vernetzung der Masse (die extrahierbaren Anteile, d.h. die nicht vernetzten Anteile, sind weniger als 5 Gew.-%) erzielt. Es wurde eine klare spröde Masse erhalten.

Beispiel 18

In 0,5 g eines Organopolysiloxanharzes aus $SiO_2$-, Trimethylsiloxan-, Dimethylvinylsiloxan- und Methylphenylsiloxaneinheiten mit einer Viskosität von 1 600 mPa•s bei 25°C, das 7,6 Gew.-% Si-gebundene Vinylgruppen enthält, wurde eine Lösung von 32 mg ($1,959 \times 10^{-6}$ mol) Kat 1 in 0,5 ml THF gelöst. Das Lösungsmittel wurde bei Raumtemperatur unter reduziertem Druck entfernt, und zur verbleibenden Reaktionsmischung wurden 5 g eines Organopolysiloxanharzes aus $SiO_2$-, Trimethylsiloxan-, Dimethylhydrogensiloxan- und Methylphenylsiloxaneinheiten mit einer Viskosität von 2 000 mPa•s bei 25°C, das 0,2 Gew.-% Si-gebundenen Wasserstoff enthält, gegeben, so daß die Mischung 100 Gew.-ppm Platin, berechnet als Element, enthielt. Die gesamte Mischung war bei Raumtemperatur und unter Lichtausschluß mindestens 6 Wochen stabil. Bei guter Durchmischung wurde nach 15 Minuten Erwärmen bei 170°C eine komplette Vernetzung der Masse erzielt. Es wurde eine klare, unlösliche Substanz erhalten.

Beispiel 19

Die Arbeitsweise von Beispiel 9 wurde wiederholt mit der Abänderung, daß 11,30 mg ($1,959 \times 10^{-6}$ mol) Kat 2 anstelle von 32 mg Kat 1 eingesetzt wurden. Die Mischung enthielt 100 Gew.-ppm Platin, berechnet als Element. Die gesamte Mischung war bei Raumtemperatur und unter Lichtausschluß mindestens 9 Wochen stabil. Bei guter Durchmischung wurde nach 2,1 Minuten Erwärmen bei 120°C eine komplette Vernetzung der Masse erzielt. Es wurde eine klare unlösliche Substanz erhalten.

Beispiel 20

Die Arbeitsweise von Beispiel 18 wurde wiederholt mit der Abänderung, daß 58,17 mg ($3,593 \times 10^{-6}$ mol) Kat 5 anstelle von 32 mg Kat 1 eingesetzt wurden. Die Mischung enthielt 100 Gew.-ppm Palladium, berechnet als Element. Die gesamte Mischung war bei Raumtemperatur und unter Lichtausschluß mindestens 9 Wochen stabil. Bei guter Durchmischung wurde nach 30 Minuten Erwärmen bei 170°C eine komplette Vernetzung der Masse erzielt. Es wurde eine klare, unlösliche Substanz erhalten.

Beispiel 21

4 g eines Organopolysiloxanharzes der Formel $(SiO_2)_{610}(Me_3SiO_{1/2})_{232}(EtO_{1/2})_{414}(HMe_2SiO_{1/2})_{156}$-$(ViMe_2SiO_{1/2})_{100}$ wurden in 16 g Toluol bei Raumtemperatur gelöst, filtriert und unter Rühren wurden 83,7 mg Kat 1 zugemischt, so daß die Mischung 100 Gew.-ppm Platin, berechnet als Element, enthielt. Nach 10 Stunden Erwärmen auf 60 °C wurde eine komplette Vernetzung der Masse erzielt. Es wurde ein steifes, leicht gelb gefärbtes Gel erhalten.

Beispiel 22

33,5 mg (1,959 x $10^{-6}$ mol) Kat 6 wurden in 0,5 ml THF gelöst und dann zu 7,46 g $\alpha,\omega$-Divinyldimethylpolysiloxan mit einer Viskosität von 500 mPa•s bei 25 °C gegeben. Das Lösungsmittel wurde bei Raumtemperatur unter reduziertem Druck entfernt. Zur verbleibenden Reaktionsmischung wurden 0,187 g eines Mischpolymerisats aus Trimethylsiloxan- und Methylhydrogensiloxaneinheiten mit einer Viskosität von 33 mPa•s bei 25 °C, das 1,12 Gew.-% Si-gebundenen Wasserstoff enthält, gegeben, so daß die Mischung 100 Gew.-ppm Platin, berechnet als Element, enthielt. Die gesamte Mischung war bei Raumtemperatur und unter Lichtausschluß mindestens 6 Wochen stabil. Nach 5 Minuten Erwärmen bei 100 °C wurde eine komplette Vernetzung der Masse (die extrahierbaren Anteile, d.h. die nicht vernetzten Anteile, sind weniger als 5 Gew.-%) erzielt. Es wurde ein transparentes, in organischen Lösungsmitteln unlösliches Produkt erhalten.

Beispiel 23

Die Arbeitsweise von Beispiel 22 wurde wiederholt mit der Abänderung, daß die Mischung durch Bestrahlung mit Ultraviolettlicht (UVA = 56 mW/$cm^2$, UVB = 12 mW/$cm^2$) anstelle durch Erhitzen bei 100 °C innerhalb von 10 Minuten vernetzt wurde.

Beispiel 24

Die Arbeitsweise von Beispiel 9 wurde wiederholt mit der Abänderung, daß 13,60 mg (1,959 x $10^{-6}$ mol) Kat 3 anstelle von 32 mg Kat 1 eingesetzt wurden. Die Mischung enthielt 100 Gew.-ppm Platin, berechnet als Element. Die gesamte Mischung war bei Raumtemperatur und unter Lichtausschluß mindestens 6 Wochen stabil. Nach 15 Minuten erwärmen bei 100 °C wurde eine komplette Vernetzung der Masse (die extrahierbaren Anteile, d. h. die nicht vernetzten Anteile, sind weniger als 5 Gew.-%) erzielt. Es wurde eine klare, spröde Masse erhalten.

Beispiel 25

Die Arbeitsweise von Beispiel 19 wurde wiederholt mit der Abänderung, daß nach 4,7 Minuten Bestrahlen mit Ultraviolettlicht (UVA = 56 mW/$cm^2$, UVB = 12 mW/$cm^2$) eine komplette Vernetzung der Masse (die extrahierbaren Anteile, d. h. die nicht vernetzten Anteile, sind weniger als 5 Gew.-%) erreicht wurde. Es wurde ein transparentes, in organischen Lösungsmitteln unlösliches Produkt erhalten.

Beispiel 26

Die Arbeitsweise von Beispiel 9 wurde wiederholt mit der Abänderung, daß 5,03 mg (1,959 x $10^{-6}$ mol) Kat 4 von 32 mg Kat 1 eingesetzt wurden. Die Mischung enthielt 100 Gew.-ppm Platin, berechnet als Element. Die gesamte Mischung war bei Raumtemperatur und unter Lichtausschluß mindestens 4 Wochen stabil. Nach 10 Minuten Erwärmen bei 100 °C wurde eine komplette Vernetzung der Masse (die extrahierbaren Anteile, d. h. die nicht vernetzten Anteile, sind weniger als 5 Gew.-%) erzielt. Es wurde eine klare, spröde Masse erhalten.

Beispiel 27

Die Arbeitsweise von Beispiel 9 wurde wiederholt mit der Abänderung, daß 2,9 mg (1,959 x $10^{-6}$ mol) Kat 7 anstelle von 32 mg Kat 1 eingesetzt wurden. Die Mischung enthielt 100 Gew.-ppm Platin, berechnet als Element. Die gesamte Mischung war bei Raumtemperatur und unter Lichtausschluß mindestens 1 Woche stabil. Nach 8 Minuten Erwärmen bei 80 °C wurde eine komplette Vernetzung der Masse (die

extrahierbaren Anteile, d. h. die nicht vernetzten Anteile, sind weniger als 5 Gew.-%) erzielt. Es wurde ein klare, spröde Masse erhalten.

**Patentansprüche**

1. Organosiloxane, mit Ausnahme von 1,3-Divinyl-1,1,3,3-tetramethyldisiloxan, welche mindestens einen chemisch gebundenen Übergangsmetallkomplex von Pt, Pd, Rh, Ru, Os oder Ir enthalten, der mindestens einen Triazen-, Tetrazen-, Tetrazdien-, Pentazdien- oder Triazenoxid-Ligand aufweist.

2. Organosiloxane nach Anspruch 1, welche aus mindestens zwei Einheiten der allgemeinen Formel 1,

$$B_mR_nSiO_{\frac{4-n-m}{2}} \qquad (1),$$

aufgebaut sind, in der
**B** einen Rest der allgemeinen Formel 2,

$MX_aY_bZ_c$ (2),

bedeutet, wobei
**M** Pt, Pd, Rh, Ru, Os oder Ir ist,
**X** einen Triazen-, Tetrazen-, Tetrazdien-, Pentazdien- oder Triazenoxid-Liganden, ausgewählt aus der Gruppe von
$ANNNR^1$, $ANNNR^1R^2$, $ANNNA^1$, $ANR^2NNNR^3A^1$, $ANNNNA^1$, $ANNNR^4NNA^1$, $ANNNNNA^1$ und $ANNNOR^1$, bedeutet, wobei
**R** einen einwertigen, gegebenenfalls substituierten Kohlenwasserstoffrest mit 1 bis 18 Kohlenstoffatomen je Rest,
**R¹** einen einwertigen, gegebenenfalls substituierten Kohlenwasserstoffrest mit 1 bis 18 Kohlenstoffatomen je Rest oder einen Rest der Formel $-SiR^5_d(OR^5)_{3-d}$,
**$R^2$, $R^3$** und **$R^4$** gleich oder verschieden sind, ein Wasserstoffatom oder einen einwertigen gegebenenfalls substituierten Kohlenwasserstoffrest mit 1 bis 18 Kohlenstoffatomen je Rest bedeuten, und
**A** und **$A^1$** gleich oder verschieden sind, einen Rest der Formel

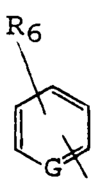 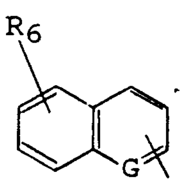 , 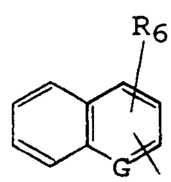 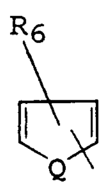 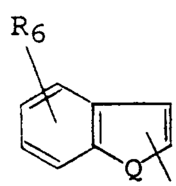 oder 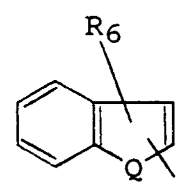

bedeuten, wobei **G** CH oder H und **Q** S, O oder NH ist,
**$R^6$** einen einwertigen gegebenenfalls substituierten Kohlenwasserstoffrest mit 1 bis 12 Kohlenstoffatomen je Rest oder einen Rest der Formel -F, -Cl, -Br, -I, -H, $-NH_2$, $-NR^6_2$, $-NO_2$, -OH, $-OR^5$, -SH, -CN, -COOH, -COCl, $-CONH_2$, $-COR^5$, -CHO, $-SO_2NHR^5$, $-SO_3H$, $-SO_2Cl$ oder $-R^7-SiR^5_d(OR^5)_{3-d}$ bedeutet,
**$R^5$** gleich oder verschieden ist und einen Alkylrest mit 1 bis 8 Kohlenstoffatomen je Rest und
**$R^7$** einen zweiwertigen Kohlenwasserstoffrest mit 1 bis 8 Kohlenstoffatomen je Rest,
**d** 0, 1, 2 oder 3 bedeuten,
**Y** gleich oder verschieden ist und einen Liganden, ausgewählt aus der Gruppe von Cl, Br, I, $NH_3$, $PR_3$, H, CO, 1,5-Cyclooctadien, Pyridin, Bipyridin, Acetat, Acetylacetonat, Phenylnitril, Ethylendiamin, Acetonitril, 2,5-Norbornadien, Nitrat, Nitrit, $H_2O$, Benzol, Diphenylphosphinoethan und 1,3-Divinyl-1,1,3,3-tetramethyldisiloxan,
**Z** gleich oder verschieden ist und einen Ligandenrest ausgewählt aus der Gruppe von $Sp-NH_2$, $Sp-NR^{10}_2$, $Sp-NR^{10}(R^7)NR^{10}_2$, Sp-4-Pyridin, Sp-2-Bipyridin, Sp-4-Bipyridin, $Sp-PR^{10}(R^7)PR^{10}_2$, $Sp-PR^{10}_2$, $Sp-POR^{10}_2$, $Sp-P(OR^{10})_2$, Sp-SH und $Sp-SR^{10}$ bedeuten,

**$R^{10}$** ein Wasserstoffatom oder einen Alkylrest mit 1 bis 6 Kohlenstoffatomen
**Sp** einen zweiwertigen, SiC-gebundenen, gegebenenfalls substituierten Kohlenwasserstoffrest mit 1 bis 18 Kohlenstoffatomen je Rest,
**a** 1, 2, 3 oder 4,
**b** 0 oder eine ganze Zahl von 1 bis 4,
**c** 1, 2, 3 oder 4 und
**m** und **n** gleich oder verschieden sind und 0 oder eine ganze Zahl von 1 bis 3 bedeuten.

**3.** Organosiloxane nach Anspruch 1, welche aus mindestens zwei Einheiten der allgemeinen Formel 3,

$$B'_mR_nSiO_{\frac{4-n-m}{2}} \qquad (3),$$

aufgebaut sind, in der
**B'** einen Rest der allgemeinen Formel 4,

$MX'_e\,Y_f$ (4),

bedeutet, wobei
**X'** einen Triazen-, Tetrazen-, Pentazdien- oder Triazenoxid-Ligandenrest, ausgewählt aus der Gruppe von
ANNNSp, $ANNNSpR^2$, $ANNSpNA^1$, $ANSpNNNR^3A^1$, $ANNNSpNNA^1$ und ANNNOSp,
bedeutet,
**e** 1, 2, 3 oder 4,
**f** 0 oder eine ganze Zahl von 1 bis 6 bedeuten und
**R, M, Y, Sp, $R^1$, $R^2$, $R^3$, $R^4$, $R^5$, $R^6$, $R^7$, A, $A^1$, d, m** und **n** die vorstehenden Bedeutungen aufweisen.

**4.** Verfahren zur Herstellung der Organosiloxane aus Einheiten der vorstehenden allgemeinen Formel 1 gemäß Anspruch 2, bei dem Organosiloxane, welche mindestens einen über Liganden gebundenen Übergangsmetallkomplex von Pt, Pd, Ph, Ru, Os oder Ir enthalten und welche aus mindestens zwei Einheiten der allgemeinen Formel 5

$$G_mR_nSiO_{\frac{4-n-m}{2}} \qquad (5),$$

aufgebaut sind, in der
**G** einen Rest der allgemeinen Formel 6,

$MY_gZ_c$ (6),

bedeutet, wobei
**n, m, R, M, Y, Z** und **c** die vorstehenden Bedeutungen aufweisen und
**g** eine ganze Zahl von 1 bis 8 bedeutet, in Gegenwart einer Base mit Triazen-, Tetrazen-, Pentazdien- oder Triazenoxid-Verbindungen, ausgewählt aus der Gruppe von
$ANNNHR^1$, $ANNNHR^2$, $ANNNHA^1$, $ANHNNNHA^1$, $ANNNHNNA^1$ und $ANNNOHR^1$,
oder ohne Base mit Triazen-, Tetrazen-, Tetrazdien-, Pentazdien- oder Triazenoxid-Verbindungen, ausgewählt aus der Gruppe von
$ANNNR^1R^2$, $ANNNR^1A^1$, $ANR^2NNNR^3A^1$ und $ANNR^4NNNA^1$,
wobei
**$R^1$, $R^2$, $R^3$, $R^4$, A** und **$A^1$** die vorstehenden Bedeutungen aufweisen,
umgesetzt werden.

5. Verfahren zur Herstellung der erfindungsgemäßen Organosiloxane der vorstehenden allgemeinen Formel 3, bei dem Organosiloxane, welche mindestens einen Triazen-, Tetrazen-, Pentazdien- oder Triazenoxidrest enthalten und welche aus mindestens zwei Einheiten der allgemeinen Formel 7,

$$X''_m R_n SiO_{\frac{4-n-m}{2}} \quad (7),$$

aufgebaut sind, in der
**X"** einen Triazen-, Tetrazen- oder Triazenoxidrest, ausgewählt aus der Gruppe von ANNNHSp, ANHNNNSpA[1] und ANNNOHSp,
bedeutet,
in Gegenwart einer Base mit einem Übergangsmetallhalogenkomplex der allgemeinen Formel 8,

$MY_hHal_i$ (8),

oder
**X"** einen Triazen-, Tetrazen-, Pentazdien- oder Triazenoxidrest, ausgewählt aus der Gruppe von ANNNRSp, ANNSpNA, ANSpNNNR[3]A[1], und ANNNSpNNA[1]
bedeutet,
ohne Base mit einem Übergangsmetallkomplex der allgemeinen Formel 9,

$MY_j$ (9),

wobei
**A, A[1], Sp, R, M, Y, m** und **n** die vorstehenden Bedeutungen aufweisen,
**Hal** ein Chlor-, Brom- oder Iodatom,
**h** 1, 2, 3 oder 4,
**i** 0 oder eine ganze Zahl von 1 bis 6 und
**j** eine ganze Zahl von 1 bis 8 bedeutet, umgesetzt werden.

6. Vernetzbare Organopolysiloxanzusammensetzungen enthaltend
(A) Organopolysiloxane, die Reste mit aliphatischen Kohlenstoff-Kohlenstoff-Mehrfachbindungen aufweisen,
(B) Organopolysiloxane mit Si-gebundenen Wasserstoffatomen oder anstelle von (A) und (B)
(C) Organopolysiloxane, die Reste mit aliphatischen Kohlenstoff-Kohlenstoff-Mehrfachbindungen und Si-gebundene Wasserstoffatome aufweisen, und
(D) als Katalysatoren Organosiloxane gemäß einem der Ansprüche 1 bis 3.

## Claims

1. Organosiloxanes, with the exception of 1,3-divinyl-1,1,3,3-tetramethyldisiloxane, which comprise at least one chemically bonded transition metal complex of Pt, Pd, Rh, Ru, Os or Ir which has at least one triazene, tetrazene, tetrazdiene, pentazdiene or triazene oxide ligand.

2. Organosiloxanes according to Claim 1, which are built up of at least two units of the general formula 1,

$$B_m R_n SiO_{\frac{4-n-m}{2}} \quad (1),$$

in which
B is a radical of the general formula 2,

$MX_aY_bZc$ (2),

where
M is Pt, Pd, Rh, Ru, Os or Ir,
X is a triazene, tetrazene, tetrazdiene, pentazdiene or triazene oxide ligand selected from the group consisting of
$ANNNR^1$, $ANNNR^1R^2$, $ANNNA^1$, $ANR^2NNNR^3A^1$, $ANNNNA^1$, $ANNNR^4NNA^1$, $ANNNNNA^1$ and $ANNNOR^1$,
where
R is a monovalent, substituted or unsubstituted hydrocarbon radical having from 1 to 18 carbon atoms per radical,
$R^1$ is a monovalent, substituted or unsubstituted hydrocarbon radical having from 1 to 18 carbon atoms per radical or a radical of the formula $-SiR^5_d(OR^5)_{3-d}$,
$R^2$, $R^3$ and $R^4$ are identical or different and are a hydrogen atom or a monovalent, substituted or unsubstituted hydrocarbon radical having from 1 to 18 carbon atoms per radical, and
A and $A^1$ are identical or different and are a radical of the formula

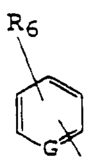 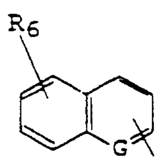 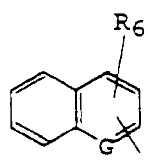 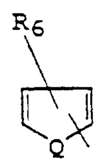 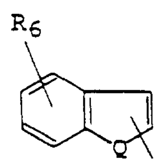 or 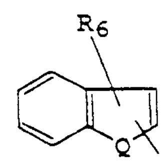

where G is CH or N and Q is S, O or NH,
$R^6$ is a monovalent, substituted or unsubstituted hydrocarbon radical having from 1 to 12 carbon atoms per radical, or a radical of the formula -F, -Cl, -Br, -I, -H, $-NH_2$, $-NR^6_2$, $-NO_2$, -OH, $-OR^5$, -SH, -CN, -COOH, -COCl, $-CONH_2$, $-COR^5$, -CHO, $-SO_2NHR^5$, $-SO_3H$, $-SO_2Cl$ or $-R^7-SiR^5_d(OR^5)_{3-d}$,
$R^5$ is identical or different and is an alkyl radical having from 1 to 8 carbon atoms per radical and
$R^7$ is a divalent hydrocarbon radical having from 1 to 8 carbon atoms per radical,
d is 0, 1, 2 or 3,
Y is identical or different and is a ligand selected from the group consisting of Cl, Br, I, $NH_3$, $PR_3$, H, CO, 1,5-cyclooctadiene, pyridine, bipyridine, acetate, acetylacetonate, phenyl cyanide, ethylenediamine, acetonitrile, 2,5-norbornadiene, nitrate, nitrite, $H_2O$, benzene, diphenylphosphinoethane and 1,3-divinyl-1,1,3,3-tetramethyldisiloxane,
Z is identical or different and is a ligand radical selected from the group consisting of $Sp-NH_2$, $Sp-NR^{10}_2$, $Sp-NR^{10}(R^7)NR^{10}_2$, Sp-4-pyridine, Sp-2-bipyridine, Sp-4-bipyridine, $Sp-PR^{10}(R^7)PR^{10}_2$, $Sp-PR^{10}_2$, $Sp-POR^{10}_2$, $Sp-P(OR^{10})_2$, Sp-SH and $Sp-SR^{10}$,
$R^{10}$ is a hydrogen atom or an alkyl radical having from 1 to 6 carbon atoms,
Sp is a divalent, SiC-bonded, substituted or unsubstituted hydrocarbon radical having from 1 to 18 carbon atoms per radical,
a is 1, 2, 3 or 4,
b is 0 or an integer from 1 to 4,
c is 1, 2, 3 or 4 and
m and n are identical or different and are 0 or an integer from 1 to 3.

3. Organosiloxanes according to Claim 1, which are built up of at least two units of the general formula 3,

$$B'_mR_nSiO_{\frac{4-n-m}{2}} \qquad (3),$$

in which
B' is a radical of the general formula 4,

$MX'_e Y_f$ (4),

where
X' is a triazene, tetrazene, pentazdiene or triazene oxide ligand radical selected from the group consisting of
ANNNSp, $ANNNSpR^2$, $ANNSpNA^1$, $ANSpNNNR^3A^1$, $ANNNSpNNA^1$ and ANNNOSp,
e is 1, 2, 3 or 4,
f is 0 or an integer from 1 to 6 and
R, M, Y, Sp, $R^1$, $R^2$, $R^3$, $R^4$, $R^5$, $R^6$, $R^7$, A, $A^1$, d, m and n are as defined above.

**4.** Process for preparing the organosiloxanes of units of the above general formula 1 according to Claim 2, in which organosiloxanes which comprise at least one transition metal complex of Pt, Pd, Rh, Ru, Os or Ir, bonded via ligands, and which are built up of at least two units of the general formula 5

$$G_m R_n SiO_{\frac{4-n-m}{2}} \quad (5),$$

in which
G is a radical of the general formula 6,

$MY_gZ_c$ (6),

where
n, m, R, M, Y, Z and c are as defined above and g is an integer from 1 to 8,
are reacted in the presence of a base with triazene, tetrazene, pentazdiene or triazene oxide compounds selected from the group consisting of
$ANNNHR^1$, $ANNNHR^2$, $ANNNHA^1$, $ANHNNNHA^1$, $ANNNHNNA^1$ and $ANNNOHR^1$,
or in the absence of base with triazene, tetrazene, tetrazdiene, pentazdiene or triazene oxide compounds selected from the group consisting of
$ANNNR^1R^2$, $ANNNR^1A^1$, $ANR^2NNNR^3A^1$ and $ANNR^4NNNA^1$,
where
$R^1$, $R^2$, $R^3$, $R^4$, A and $A^1$ are as defined above.

**5.** Process for preparing the organosiloxanes of the above general formula 3 of the invention, in which organosiloxanes which comprise at least one triazene, tetrazene, pentazdiene or triazene oxide radical and which are built up of at least two units of the general formula 7,

$$X''_m R_n SiO_{\frac{4-n-m}{2}} \quad (7),$$

in which
X" is a triazene, tetrazene or triazene oxide radical selected from the group consisting of
ANNNHSp, $ANHNNNSpA^1$ and ANNNOHSp,
are reacted in the presence of a base with a transition metal halide complex of the general formula 8,

$MY_hHal_i$ (8),

or
X" is a triazene, tetrazene, pentazdiene or triazene oxide radical selected from the group consisting of
ANNNRSp, ANNSpNA, $ANSpNNNR^3A^1$, and $ANNNSpNNA^1$,

in the absence of base with a transition metal complex of the general formula 9,

$MY_j$ (9),

where
A, $A^1$, Sp, R, M, Y, m and n are as defined above,
Hal is a chlorine, bromine or iodine atom,
h is 1, 2, 3 or 4,
i is 0 or an integer from 1 to 6 and
j is an integer from 1 to 8.

**6.** Crosslinkable organopolysiloxane compositions comprising
(A) organopolysiloxanes which comprise radicals having aliphatic carbon-carbon multiple bonds,
(B) organopolysiloxanes having Si-bonded hydrogen atoms or, instead of (A) and (B),
(C) organopolysiloxanes which comprise radicals having aliphatic carbon-carbon multiple bonds and Si-bonded hydrogen atoms, and
(D) as catalysts, organosiloxanes according to any one of Claims 1 to 3.

**Revendications**

**1.** Organosiloxane, à l'exception du 1,3-divinyl-1,1,3,3-tétraméthyldisiloxane, lequel contient au moins un complexe de métal de transition lié chimiquement de Pt, Pd, Rh, Ru, Os ou Ir et qui présente au moins un ligand triazène, tétrazène, tétrazdiène, pentazdiène ou triazèneoxyde.

**2.** Organosiloxane suivant la revendication 1, lequel est construit à partir d'au moins deux unités de formule générale 1,

$B_mR_nSiO_{(4-n-m)/2}$ (1)

B représente un radical de formule générale 2,

$MX_aY_bZ_c$ (2)

où:
M est Pt, Pd, Rh, Ru, Os ou Ir,
X représente un ligand triazène, tétrazène, tétrazdiène, pentazdiène ou triazèneoxyde, choisi dans le groupe consistant en :
$ANNNR^1$, $ANNNR^1R^2$, $ANNNA^1$, $ANR^2NNNR^3A^1$, $ANNNNA^1$, $ANNNR^4NNA^1$, $ANNNNNA^1$ et $ANNNOR^1$, où :
R représente un radical hydrocarbure monovalent, facultativement substitué, avec 1 à 18 atomes de carbone par radical,
$R^1$ représente un radical hydrocarbure monovalent, facultativement substitué, avec 1 à 18 atomes de carbone par radical ou un radical de formule $-SiR^5{}_d(OR^5)_{3-d}$,
$R^2$, $R^3$ et $R^4$ sont identiques ou différents et représentent un atome d'hydrogène ou un radical hydrocarbure monovalent, facultativement substitué, avec 1 à 18 atomes de carbone par radical, et
A et $A^1$ sont identiques ou différents et représentent un radical de formule

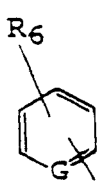 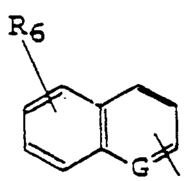 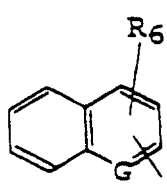 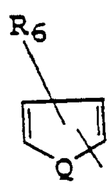 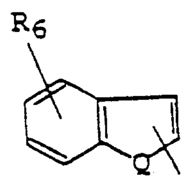 or 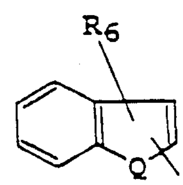

où :
G est CH ou N et Q est S, O ou NH,
$R^6$ représente un radical hydrocarbure monovalent, facultativement substitué, avec 1 à 12 atomes

de carbone par radical ou un radical de formule -F, -Cl, -Br, -I, -H, $-NH_2$, $-NR^6{}_2$,$-NO_2$, -OH, $-OR^5$, -SH, -CN, -COOH, -COCl, $-CONH_2$, $-COR^5$, -CHO, $-SO_2NHR^5$, $-SO_3H$, $-SO_2Cl$ ou $-R^7-SiR^5{}_d(OR^5)_{3-d}$,

$R^5$ est identique ou différent et représente un radical alcoyle de 1 à 8 atomes de carbone par radical et

$R^7$ représente un radical hydrocarbure bivalent avec 1 à 8 atomes de carbone par radical,

d représente 0, 1, 2 ou 3,

Y est identique ou différent et représente un ligand choisi parmi le groupe composé de Cl, Br, I, $NH_3$, $PR_3$, H, CO, 1,5-cyclooctadiène, pyridine, bipyridine, acétate, acétylacétonate, phénylnitrile, éthylènediamine, acétonitrile, 2,5-norbornadiène, nitrate, nitrite, $H_2O$, benzole, diphénylphosphinoéthane et 1,3-divinyl-1,1,3,3-tétraméthyldisiloxane;

Z est identique ou différent et représente un ligand choisi parmi le groupe composé de $Sp-NH_2$, $Sp-NR^{10}{}_2$, $Sp-NR^{10}(R^7)NR^{10}{}_2$, Sp-4-pyridine, Sp-2-bipyridine, Sp-4-bipyridine, $Sp-PR^{10}(R^7)PR^{10}{}_2$, $Sp-PR^{10}{}_2$, $Sp-POR^{10}{}_2$, $Sp-P(OR^{10})_2$, Sp-SH et $Sp-SR^{10}$

$R^{10}$ représente un atome d'hydrogène ou un radical alcoyle avec 1 à 6 atomes de carbone

Sp représente un radical hydrocarbure bivalent, à liaison Si-C, facultativement substitué, avec 1 à 18 atomes de carbone par radical

a est 1, 2, 3 ou 4,

b est 0 ou un nombre entier de 1 à 4,

c est 1, 2, 3 ou 4, et

m et n sont identiques ou différents et représentent 0 ou un nombre entier de 1 à 3.

**3.** Organosiloxane suivant la revendication 1, lequel est construit à partir d'au moins deux unités de formule générale 3 :

$B'_mR_nSiO_{(4-n-m)/2}$ (3)

B' représente un radical de formule générale 4 :

$MX'_eY_f$ (4)

où :

X' représente un ligand triazène, tétrazène, pentazdiène ou triazèneoxyde, choisi dans le groupe consistant en :

ANNNSp, $ANNNSpR^2$, $ANNSpNA^1$, $ANSpNNNR^3A^1$, $ANNNSpNNA^1$ et ANNNOSp,

e représente 1, 2, 3 ou 4,

f représente 0 ou un nombre entier de 1 à 6 et,

R, M, Y, Sp, $R^1$, $R^2$, $R^3$, $R^4$, $R^5$, $R^6$, $R^7$, A, $A^1$, d, m et n ont les significations données précédemment.

**4.** Procédé de préparation de l'organosiloxane constitué des unités de formule générale 1 suivant la revendication 2, dans lequel l'organosiloxane qui contient au moins un complexe de métal de transition lié par un ligand, de Pt, Pd, Rh, Ru, Os ou Ir et qui est construit à partir d'au moins deux unités de formule générale 5 :

$G_mR_nSiO_{(4-n-m)/2}$ (5)

G représente un radical de formule générale 6 :

où :

n, m, R, M, Y, Z et c ont les significations données précédemment, et

g représente un nombre entier de 1 à 8, est mis à réagir en présence d'une base avec un composé triazène, tétrazène, pentazdiène ou triazèneoxyde, choisi dans le groupe consistant en :

$ANNNHR^1$, $ANNNHR^2$, $ANNNHA^1$, $ANHNNNHA^1$, $ANNNHNNA^1$, et $ANNNOHR^1$,

ou sans base avec un composé triazène, tétrazène, tétrazdiène, pentazdiène ou triazèneoxyde, choisi dans le groupe consistant en :

$ANNNR^1R^2$, $ANNNR^1A^1$, $ANR^2NNNR^3A^1$ et $ANNR^4NNNA^1$, où :

$R^1$, $R^2$, $R^3$, $R^4$, A et $A^1$ ont les significations données précédemment.

**5.** Procédé de préparation de l'organosiloxane suivant l'invention de formule générale précédente 3, dans lequel l'organosiloxane qui contient au moins un radical triazène, tétrazène, pentazdiène ou triazèneoxyde et qui est construit à partir d'au moins deux unités de formule générale 7,

$X''_mR_nSiO_{(4-n-m)/2}$ (7)

X" représente un radical triazène, tétrazène ou triazèneoxyde, choisi parmi le groupe consistant en :

ANNNHSp, ANHNNNSpA$^1$ et ANNNOHSp, est mis à réagir en présence d'une base avec un complexe halogéné d'un métal de transition de formule générale 8,

$MY_hHal_i$ (8)

ou

X" représente un radical triazène, tétrazène, pentazdiène ou triazèneoxyde, choisi parmi le groupe consistant en :

ANNNRSp, ANNSpNA, ANSpNNNR$^3$A$^1$ et ANNNSpNNA$^1$,

sans base avec un complexe de métal de transition de formule générale 9,

$MY_j$ (9)

où :

A, A$^1$, Sp, R, M, Y, m et n ont les significations données précédemment,
Hal représente un atome de chlore, de brome ou d'iode,
h représente 1, 2, 3 ou 4,
i représente 0 ou un nombre entier de 1 à 6, et
j représente un nombre entier de 1 à 8.

**6.** Compositions organopolysiloxanes réticulables contenant :

(A) un organopolysiloxane qui présente un radical avec liaisons multiples carbone-carbone aliphatiques,
(B) un organopolysiloxane avec des atomes d'hydrogène à liaison Si, ou à la place de (A) et de (B)
(C) un organopolysiloxane qui présente un radical avec liaisons multiples carbone-carbone aliphatiques et des atomes d'hydrogène à liaison Si, et
(D) comme catalyseur, un organosiloxane suivant l'une quelconque des revendications 1 à 3.